# EUROPÄISCHE PATENTSCHRIFT

(11) **EP 0 571 647 B1**
(45) Veröffentlichungstag und Bekanntmachung des Hinweises auf die Patenterteilung: **22.10.1997**
(21) Anmeldenummer: 92108775.5
(22) Anmeldetag: 25.05.1992
(51) Int. Cl.: H04L 12/18, H04L 12/56

(54) **Verfahren zum Rundsenden von nach einem asynchronen Übertragungsverfahren übertragenen Nachrichtenzellen**
Method of broadcasting information cells transmitted according to an asynchronous transfer mode
Procédé de diffusion de cellules d'information transmises selon un mode de transfert asynchrone

(43) Veröffentlichungstag der Anmeldung: 01.12.1993
(73) Patentinhaber: SIEMENS AKTIENGESELLSCHAFT, 80333 München (DE)
(72) Erfinder: Schaffer, Bernhard, Dipl.-Ing., W-8035 Gauting (DE)

(56) Entgegenhaltungen:
- INTERNATIONAL SWITCHING SYMPOSIUM 1990 Bd. IV, Juni 1990, STOCKHOLM SE Seiten 23 - 27 I. GARD ET AL. 'AN ATM SWITCH IMPLEMENTATION - TECHNIQUE AND TECHNOLOGY'
- IEEE INFOCOM 91 Bd. 2, April 1991, BAL HARBOUR FL US Seiten 850 - 858 D. J. MARCHOK ET AL. 'MULTICASTING IN A GROWABLE PACKET (ATM) SWITCH'
- INTERNATIONAL CONFERENCE ON COMMUNICATIONS ICC 91 Bd. 3, Juni 1991, DENVER US Seiten 1575 - 1581 K. J. SCHRODI ET AL. 'DYNAMIC CONNECTION REARRANGEMENTS IN ATM SWITCHING NETWORKS'

## Beschreibung

In Kommunikationsnetzen, in denen Informationen im Nutzdatenteil von nach einem asynchronen Übertragungsverfahren (asynchronous transfer mode) übertragenen Nachrichtenzellen übertragen werden, kann es in Rundsendeverbindungen wie z.B. broadcast-, multicast- bzw. point-to-multipoint-Verbindungen erforderlich sein, daß die Information, die in einer von einer Teilnehmerstelle abgegebenen Nachrichtenzelle enthalten ist, an mehrere Teilnehmerstellen weitergeleitet werden muß. Zur Überwachung und Auswertung von innerhalb des Kommunikationsnetzes benutzten Signalisierungszeichen kann es erforderlich sein, eine Nachrichtenzelle nicht nur an eine Teilnehmerstelle, sondern auch an eine vermittlungsinterne Einrichtung weiterzuleiten. Bei der Weiterleitung einer Nachrichtenzelle in unterschiedliche Richtungen tritt das Problem auf, daß der ursprünglichen Zielinformation VPI/VCI (virtual path identifier/virtual channel identifier), die in dem dem Nutzdatenteil vorangestellten Nachrichtenzellenkopf enthalten ist, mehrere neue Zielinformationen zugeordnet werden müssen. Dieses Problem kann mit einem eine VPI/VCI-Tabelle enthaltenden Umwertespeicher (translation memory), der in bekannter Weise unter Verwendung eines Speichers mit wahlfreiem Zugriff RAM (random access memory) realisiert ist, nicht in einfacher Weise gelöst werden. Nach dem heutigen Stand der Normung sind für die in der Zielinformation enthaltenen VPI (virtual path identifier) und VCI (virtual channel identifier) 28 bit vorgesehen. Unter der Annahme, daß der Wertbereich für die Zielinformation vollständig ausgenutzt wird, sind bei einer Realisierung der Umwertung der Zielinformation unter Verwendung eines Speichers mit wahlfreiem Zugriff RAM 2 exp 28 Speicherplätze für jede Teilnehmerstelle erforderlich.

Aus International Zürich Seminar 1990, Conf. papers pages 63...73 ist es bekannt, die Umwertung einer ursprünglichen Zielinformation in eine einzige neue Zielinformation unter Verwendung eines inhaltsadressierten Speichers vorzunehmen. Dazu wird dem inhaltsadressierten Speicher (content addressable memory) die ursprüngliche Zielinformation als Suchbegriff zugeführt und die neue Zielinformation diesem Suchbegriff zugegeordnet. Diese Lösung ermöglicht die Reduktion der Anzahl von erforderlichen Speicherplätzen je Teilnehmer auf die tatsächlich benötigte Anzahl von beispielsweise 4.000; aus ihr ist jedoch kein Hinweis auf die Realisierung von point-to-multipoint-Verbindungen ersichtlich.

Für Kommunikationsnetze, in denen Informationen im Nutzdatenteil von nach einem asynchronen Übertragungsverfahren übertragenen Nachrichtenzellen weitergeleitet werden, ist es aus International Switching Symposium, May 27 - June 1, 1990, Session A6, Paper # 6, Vol. IV, Pages 143-147, eine rundsendefähige Vermittlungseinrichtung bekannt, die eine Kaskadierung zweier Koppelnetze aufweist, deren zweites Nachrichtenzellen zu kopieren vermag. Eine solche Lösung ist jedoch recht aufwendig.

Die Erfindung zeigt demgegenüber einen Weg zu point-to-multipoint-Verbindungen in einer an sich nur für point-to-point-Verbindungen gedachten Vermittlungseinrichtung.

Die Erfindung betrifft ein Verfahren zum Rundsenden einer von einer Eingangsleitung einer Vermittlungseinrichtung, die ein Koppelnetz mit einer Vielzahl von Eingängen und Ausgängen aufweist, empfangenen Nachrichtenzelle auf eine Mehrzahl von Ausgangsleitungen, bei dem
- Nachrichtenzellen nach einem asynchronen Übertragungsverfahren übertragen werden
- jede Nachrichtenzelle einen Nutzdatenteil und einen diesem vorangestellten Nachrichtenzellenkopf aufweist
- jeder Nachrichtenzellenkopf eine Zielinformation mit sich führt
- die ursprüngliche Zielinformation einer gerade empfangenen Nachrichtenzelle einem inhaltsadressierten Speicher zugeführt wird
- der inhaltsadressierte Speicher nach Maßgabe dieser Zielinformation die Bereitstellung einer Mehrzahl von neuen Zielinformationen bewirkt
- die neuen Zielinformationen jeweils mit dem Nutzdatenteil der gerade empfangenen Nachrichtenzelle zu neuen Nachrichtenzellen zusammengestellt werden
- die neuen Nachrichtenzellen jeweils nach Maßgabe ihrer neuen Zielinformation auf die betreffende Ausgangsleitung weitergeleitet werden.

Die Erfindung bringt eine aufwandsarme Realisierung von point-to-multipoint-Verbindungen für eine an sich nur für point-to-point-Verbindungen gedachte Vermittlungseinrichtung mit sich.

Gemäß einer besonderen Ausgestaltung der Erfindung gibt der inhaltsadressierte Speicher nach Maßgabe einer Zielinformation eine Mehrzahl von Adressen ab, die einem Umwertespeicher zugeführt werden, wobei der Umwertespeicher für jede zugeführte Adresse eine neue Zielinformation bereitstellt. Diese Maßnahme bringt eine Verminderung der notwendigen Speicherkapazität des inhaltsadressierten Speichers mit sich.

Gemäß einer weiteren Ausgestaltung der Erfindung werden vermehrfachte Nachrichtenzellen, gegebenenfalls zusammen mit nicht-vermehrfachten Nachrichtenzellen, auf eine Mehrzahl von Eingängen des Koppelnetzes der Vermittlungseinrichtung verteilt. Durch diese Maßnahme wird eingangsseitigen Überlasterscheinungen des Koppelnetzes entgegengewirkt.

Die Erfindung wird nun als Ausführungsbeispiel in zum Verständnis erforderlichem Umfang anhand von Figuren näher beschrieben.

Dabei zeigen
Fig. 1 die schematische Darstellung einer Vermittlungseinrichtung, in der das erfindungsgemäße Verfahren durchgeführt wird
Fig. 2 nähere Einzelheiten eines inhaltadressierten Speichers, der in dem mit HTU bezeichneten Block aus Fig. 1 enthalten ist
Fig. 3 nähere Einzelheiten einer alternativen Ausgestaltung des inhaltsadressierten Speichers
Fig. 4 nähere Einzelheiten eines Umwertespeichers, der ebenfalls in dem mit HTU bezeichneten Block aus Fig. 1 enthalten ist
Fig. 5 schematisch den Anschluß eines erfindungsgemäßen Servers in einer Vermittlungseinrichtung
Fig. 6 nähere Einzelheiten des Servers aus Fig. 5.

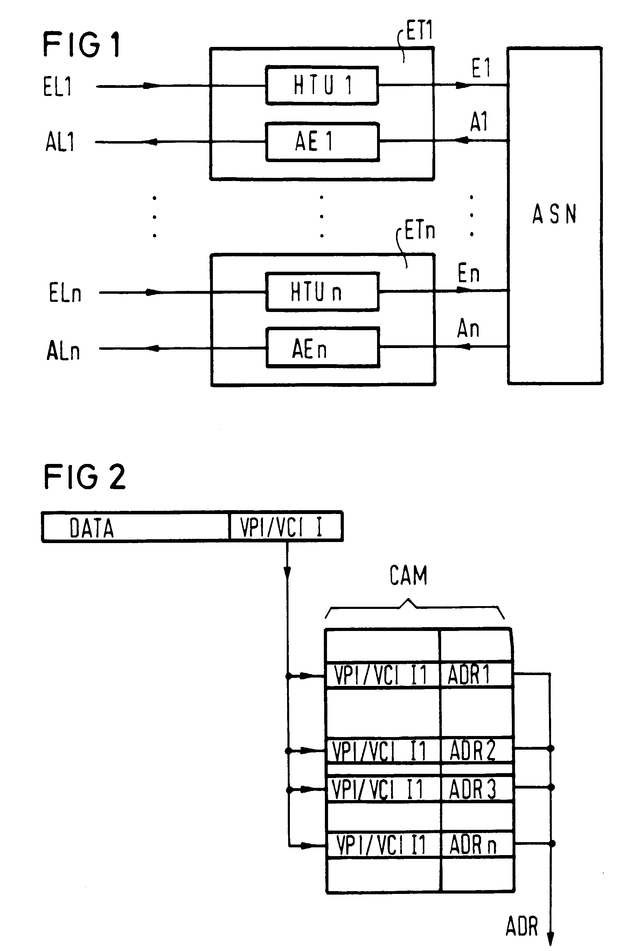

Fig. 1 zeigt eine Vermittlungseinrichtung zur wahlfreien Weiterleitung von im Zuge von virtuellen Verbindungen nach einem asynchronen Übertragungsverfahren übertragenen Nachrichtenzellen von Eingangsleitungen EL1...ELn auf Ausgangsleitungen AL1...ALn in geklappter Darstellung, wobei zur besseren Anschaulichkeit die Eingangsleitungen und die Ausgangsleitungen getrennt dargestellt sind. Die Nachrichtenzellen weisen jeweils einen Nutzdatenteil mit beispielsweise 48 Byte und einen diesem vorangestellten Nachrichtenzellenkopf mit beispielsweise 5 Byte auf. In dem Nachrichtenzellenkopf ist eine Zielinformation mit beispielsweise 28 bit enthalten, die die Ziel-Vermittlungsstelle bzw. die Ziel-Teilnehmerstelle bezeichnet. Eine auf einer Eingangsleitung ankommende Nachrichtenzelle wird von einer der jeweiligen Eingangsleitung zugehörigen Vermittlungsabschlußeinrichtung ET1...ETn empfangen. Jede Vermittlungsabschlußeinrichtung weist einen mit der zugehörigen Eingangsleitung verbundenen Umwerter HTU1...HTUn auf. In dem Umwerter wird die Zielinformation einer gerade empfangenen Nachrichtenzelle durch eine neue Zielinformation ersetzt. Dabei ist die neue Zielinformation durch eine im Zuge des Aufbaus der virtuellen Verbindung, der die gerade empfangene Nachrichtenzelle zugehört, bereitgestellte Zielinformation gegeben. Der Nutzdatenteil der gerade empfangenen Nachrichtenzelle bildet zusammen mit der neuen Zielinformation eine neue Nachrichtenzelle, die gegebenenfalls um eine vermittlungsinterne Information ergänzt ist. Die neuen Nachrichtenzellen werden einem Eingang E1...En eines Koppelnetzes ASN der Vermittlungseinrichtung zugeführt und nach Maßgabe der jeweiligen neuen Zielinformation bzw. der vermittlungsinternen Information zu einem Ausgang A1...An des Koppelnetzes durchgeschaltet. Vom Ausgang des Koppelnetzes wird eine jeweilige neue Nachrichtenzelle einer in der zugehörigen Vermittlungsabschlußeinrichtung enthaltenen Ausgangseinrichtung AE1...AEn zugeführt. In der Ausgangseinrichtung werden die neuen Nachrichtenzellen vor der Weiterleitung auf die zugehörige Ausgangsleitung auf den Nachrichtenzellentakt auf der Ausgangsleitung synchronisiert. Darüber hinaus kann in den Ausgangseinrichtungen gegebenenfalls eine Entfernung der vermittlungsinternen Information und eine Wiederherstellung der Reihenfolge von Nachrichtenzellen einer virtuellen Verbindung hinzutreten. Es sei darauf hingewiesen, daß die Erfindung ohne Einschränkung auch auf Vermittlungseinrichtungen anwendbar ist, bei denen der Nutzdatenteil einer gerade empfangenen Nachrichtenzelle nur zusammen mit der zugehörigen vermittlungsinternen Information und nach Maßgabe der vermittlungsinternen Information durch das Koppelnetz durchgeschaltet werden, wobei in der betreffenden Ausgangseinrichtung die vermittlungsinterne Information durch die neue Zielinformation ersetzt wird.

Gemäß der Erfindung wird eine von einer Eingangsleitung empfangene Nachrichtenzelle auf eine Mehrzahl von Ausgangsleitungen weitergeleitet.

Fig. 2 zeigt nähere Einzelheiten des zur Realisierung dieser erfindungsgemäßen Maßnahme geeigneten Umwerters HTU aus Fig. 1. Im oberen Teil von Fig. 2 ist eine Nachrichtenzelle dargestellt, die einen Nutzdatenteil DATA und eine diesem vorangestellte ursprüngliche Zielinformation VPI/VCI I aufweist. Die ursprüngliche Zielinformation wird einem inhaltsadressierten Speicher CAM zugeführt. Bei inhaltsadressierten Speichern, die in der Fachwelt allgemein als content addressable memory bekannt sind, wird ein wahlfreier Eintrag zur Bezeichnung eines abgespeicherten Wertes verwendet. Im vorliegenden Fall werden die ursprünglichen Zielinformationen von gerade eingerichteten virtuellen Verbindungen als Einträge verwendet. Erfindungsgemäß ist nun in dem Ausführungsbeispiel nach Fig. 2 vorgesehen, daß für eine virtuelle Verbindung ebenso viele Einträge der zugehörigen ursprünglichen Zielinformation erfolgen, wie dieser virtuellen Verbindung zugehörige Nachrichtenzellen mit untereinander gleichem Nutzdatenteil auf unterschiedliche Ausgangsleitungen weiterzuleiten sind. Die Einträge in dem inhaltsadressierten Speicher können dabei an beliebiger Stelle und in beliebiger Reihenfolge erfolgen. Der inhaltsadressierte Speicher nach Fig. 2 ist nun so organisiert, daß eine zugeführte ursprüngliche Zielinformation mit sämtlichen Einträgen verglichen wird, wobei für jede Übereinstimmung von ursprünglicher Zielinformation und Eintrag der durch den jeweiligen Eintrag bezeichnete Wert am Ausgang des inhaltsadressierten Speichers abgegeben wird. In vorteilhafter Weise werden die Werte sequentiell von dem inhaltsadressierten Speicher abgegeben. Die durch Einträge bezeichneten Werte können unmittelbar durch neue Zielinformationen gegeben sein, die jeweils zusammen mit dem der ursprünglichen Zielinformation zugehörigen Nutzdatenteil zu neuen Nachrichtenzellen zusammengestellt werden. Bei dem Ausführungsbeispiel nach Fig. 2 sind die durch die Einträge bezeichneten Werte durch Adressen ADR1 ..ADRn gegeben.

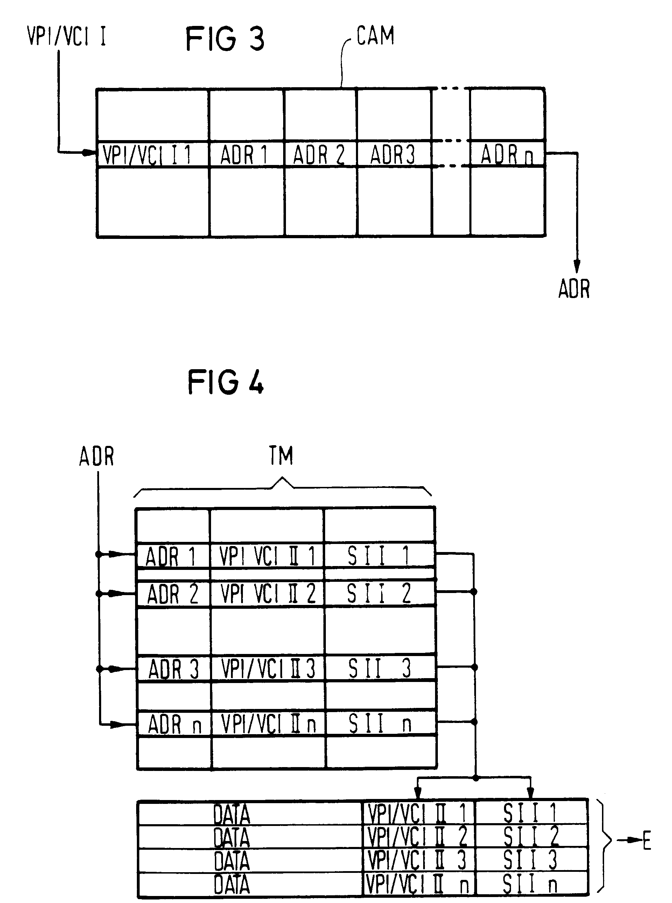

Alternativ zu dem Ausführungsbeispiel nach Fig. 2 kann der inhaltsadressierte Speicher, wie in Fig.3 dargestellt, ausgebildet sein. Der inhaltsadressierte Speicher nach Fig. 3 weist für jede gerade eingerichtete virtuelle Verbindung nur einen Eintrag einer ursprünglichen Zielinformation auf.

Jedem Eintrag sind ebenso viele Adressen ADR1...ADRn zugeordnet, wie einer virtuellen Verbindung zugehörige Nachrichtenzellen mit untereinander gleichem Nutzdatenteil auf unterschiedliche Ausgangsleitungen weiterzuleiten sind. Bei Zuführung einer ursprünglichen Zielinformation als Suchbegriff am Eingang des inhaltsadressierten Speichers werden am Ausgang die zugeordneten Adressen vorzugsweise sequentiell abgegeben. Die von einem inhaltsadressierten Speicher nach Fig. 2 oder Fig. 3 abgegebenen Adressen werden einem Umwertespeicher TM nach Fig. 4 zugeführt. Umwertespeicher sind in der Fachwelt allgemein als translation memory bekannt und brauchen deshalb hier nicht näher beschrieben zu werden. Der Umwertespeicher gibt für jede an seinem Eingang zugeführte Adresse an seinem Ausgang eine dieser Adresse bei Einrichtung der zugehörigen virtuellen Verbindung zugeordnete neue Zielinformation VPI/VCI II und gegebenenfalls eine vermittlungsinterne Information SII ab. Die vermittlungsinterne Information dient der Durchschaltung von Nachrichtenzellen durch das Koppelnetz und kann dazu sämtliche, nicht näher dargestellte Module des Koppelnetzes bezeichnen, über die eine jeweilige Nachrichtenzelle zu einem bestimmten Ausgang des Koppelnetzes durchzuschalten ist. Die von dem Umwertespeicher abgegebene neue Zielinformation wird gegebenenfalls zusammen mit der vermittlungsinternen Information jeweils einem Nutzdatenteil vorangestellt, womit neue Nachrichtenzellen gebildet werden. Die neuen Nachrichtenzellen werden einem Eingang des Koppelnetzes zugeführt und nach Maßgabe der neuen Zielinformation bzw. der vermittlungsinternen Information zu einem bestimmten Ausgang des Koppelnetzes durchgeschaltet, von wo aus sie über die zugehörige Ausgangseinrichtung auf die betreffende Ausgangsleitung weitergeleitet werden.

Die Weiterleitung einer auf einer Eingangsleitung ankommenden Nachrichtenzelle auf einer Mehrzahl von Ausgangsleitungen bringt eine erhöhte Rate über das Koppelnetz durchzuschaltender Nachrichtenzellen mit sich. Dieser erhöhten Nachrichtenzellenrate kann durch folgende Maßnahmen begegnet werden. Gemäß einer Maßnahme werden die vermehrfachten neuen Nachrichtenzellen mit untereinander gleichem Nutzdatenteil in der Vermittlungsabschlußeinrichtung zwischengespeichert. Von diesen Nachrichtenzellen wird immer dann eine Nachrichtenzelle einem Eingang des Koppelnetzes zugeführt, wenn diesem Eingang gerade keine Nachrichtenzelle zugeführt wird, die nicht auf eine Mehrzahl von Ausgangsleitungen weiterzuleiten ist. Bei dieser Maßnahme werden also gewissermaßen die vermehrfachten Nachrichtenzellen jeweils in die Lücken von nicht zu vermehrfachenden Nachrichtenzellen des ankommenden Nachrichtenzellenstroms eingeschoben. Gemäß einer anderen Maßnahme werden vermehrfachte Nachrichtenzellen mit untereinander gleichem Nutzdatenteil unmittelbar aufeinanderfolgend einem Eingang des Koppelnetzes zugeführt und auf der Eingangsleitung ankommende Nachrichtenzellen so lange zwischengespeichert, bis diese vermehrfachten Nachrichtenzellen durchgeschaltet sind. Eine weitere Maßnahme besteht darin, vermehrfachte Nachrichtenzellen einer Mehrzahl von Eingängen des Koppelnetzes zuzuführen, wodurch Blockierungen und damit Verlusten von Nachrichtenzellen entgegengewirkt wird. Dazu kann vorgesehen sein, daß die von einem Umwerter abgegebenen Nachrichtenzellen zyklisch auf einer Mehrzahl von Eingängen des Koppelnetzes verteilt werden.

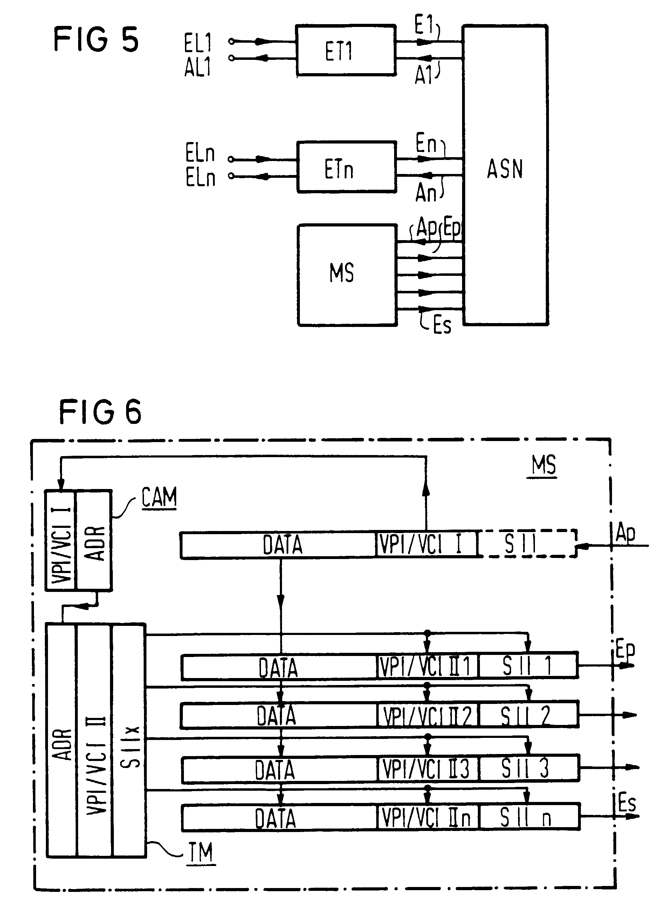

Gemäß einer besonderen Ausgestaltung der nach Fig. 5 werden Nachrichtenzellen, die auf einer Mehrzahl von Ausgangsleitungen weiterzuleiten sind, einem Rundsende-Server MS zugeführt. Ein Rundsende-Server ist mit einem Ausgang Ap und einer Mehrzahl von Eingängen Ep...Es des Koppelnetzes verbunden. Nachrichtenzellen, die auf einer Mehrzahl von Ausgangsleitungen weiterzuleiten sind, werden nach Maßgabe ihrer ursprünglichen Zielinformation bzw. nach Maßgabe einer den Nachrichtenzellen in der Vermittlungsabschlußeinrichtung hinzugefügten vermittlungsinternen Information SII über das Koppelnetz zum Rundsende-Server durchgeschaltet. Die Vermehrfachung von Nachrichtenzellen erfolgt in dem Rundsende-Server.

In Fig. 6 sind nähere Einzelheiten des Rundsende-Servers dargestellt. Über den Ausgang Ap des Koppelnetzes wird dem Server eine Nachrichtenzelle mit der ursprünglichen Zielinformation VPI/VCI I und gegebenenfalls mit der vermittlungsinternen Information SII zugeführt. Die ursprüngliche Zielinformation VPI/VCI I wird, wie für Fig. 2 oder Fig. 3 beschrieben, einem inhaltsadressierten Speicher CAM zugeführt, der ausgangsseitig eine ebenso große Mehrzahl von Adressen abgibt, wie Nachrichtenzellen mit untereinander gleichem Nutzdatenteil auf eine Mehrzahl von Ausgangsleitungen weiterzuleiten sind.

Der Umwertespeicher gibt für jede Adresse eine beim Aufbau der jeweiligen virtuellen Verbindung abgespeicherte neue Zielinformation VPI/VCI II und gegebenenfalls eine vermittlungsinterne Information SIIx ab. Der Nutzdatenteil der gerade behandelten Nachrichtenzelle wird jeweils mit einer neuen Zielinformation und gegebenenfalls mit einer vermittlungsinternen Information SII1...SIIn zu einer neuen Nachrichtenzelle zusammengestellt. Die neuen Nachrichtenzellen mit untereinander gleichem Nutzdatenteil werden jeweils einem Eingang Ep...Es des Koppelnetzes zugeführt und über das Koppelnetz auf die betreffende Ausgangsleitung weitergeleitet.

In einer Vermittlungseinrichtung kann eine nach verkehrstechnischen Anforderungen erforderliche Anzahl von Rundsende-Servern vorgesehen sein.

## Patentansprüche

1. Verfahren zum Rundsenden einer von einer Eingangsleitung (EL1...ELn) einer Vermittlungseinrichtung, die ein Koppelnetz (ASN) mit einer Vielzahl von Eingängen (E1...En) und Ausgängen (A1...An) aufweist, empfangenen Nachrichtenzelle auf eine Mehrzahl von Ausgangsleitungen (AL1...ALn), bei dem
- Nachrichtenzellen nach einem asynchronen Übertragungsverfahren übertragen werden
- jede Nachrichtenzelle einen Nutzdatenteil (DATA) und einen diesem vorangestellten Nachrichtenzellenkopf aufweist
- jeder Nachrichtenzellenkopf eine Zielinformation (VPI/VCI) mit sich führt
- die ursprüngliche Zielinformation (VPI/VCI I) einer gerade empfangenen Nachrichtenzelle einem inhaltsadressierten Speicher (CAM) zugeführt wird
- der inhaltsadressierte Speicher nach Maßgabe dieser Zielinformation die Bereitstellung einer Mehrzahl von neuen Zielinformationen (VPI/VCI II) bewirkt
- die neuen Zielinformationen jeweils mit dem Nutzdatenteil der gerade empfangenen Nachrichtenzelle zu neuen Nachrichtenzellen zusammengestellt werden
- die neuen Nachrichtenzellen jeweils nach Maßgabe ihrer neuen Zielinformation auf die betreffende Ausgangsleitung weitergeleitet werden.

2. Verfahren nach Anspruch 1, bei dem
der inhaltsadressierte Speicher nach Maßgabe der jeweiligen Zielinformation eine Mehrzahl von Adressen (ADR1... ADRn) abgibt, die einem Umwertespeicher (TM) zugeführt werden, wobei der Umwertespeicher für jede zugeführte Adresse eine neue Zielinformation (VPI/VCI II) bereitstellt.

3. Verfahren nach Anspruch 2, bei dem
die Adressen von dem inhaltsadressierten Speicher an den Umwertespeicher aufeinanderfolgend abgegeben werden.

4. Verfahren nach Anspruch 1, 2 oder 3, bei dem
die vermehrfachten neuen Nachrichtenzellen zwischengespeichert werden und immer dann eine von diesen Nachrichtenzellen weitergeleitet wird, wenn gerade keine nicht-vermehrfachte Nachrichtenzelle weitergeleitet wird.

5. Verfahren nach Anspruch 1, 2 oder 3, bei dem
nicht-vermehrfachte Nachrichtenzellen zwischengespeichert werden und erst dann weitergeleitet werden, wenn vermehrfachte Nachrichtenzellen mit untereinander gleichem Nutzdatenteil weitergeleitet worden sind.

6. Verfahren nach einem der vorstehenden Ansprüche, bei dem
vermehrfachte neue Nachrichtenzellen mit untereinander gleichem Nutzdatenteil jeweils einem Eingang des Koppelnetzes zugeführt werden.

7. Verfahren nach einem der Ansprüche 1, 2 oder 3, bei dem
zu vermehrfachende Nachrichtenzellen über das Koppelnetz einem Multicast-Server MS zugeführt werden, in dem diese Nachrichtenzellen vermehrfacht werden, worauf die vermehrfachten Nachrichtenzellen über das Koppelnetz auf die betreffende Ausgangsleitung weitergeleitet werden.

8. Verfahren nach Anspruch 7, bei dem
die vermehrfachten Nachrichtenzellen einer Mehrzahl von Eingängen des Koppelnetzes zugeführt werden.

## Claims

1. Method of broadcasting an information cell, received from an input line (EL1...ELn) of a switching device which has a switching matrix (ASN) with a plurality of inputs (E1...En) and outputs (A1...An), over a plurality of output lines (AL1...ALn), in which
- information cells are transmitted according to an asynchronous transmission method
- each information cell has a useful data component (DATA) and an information cell head preceding the latter
- each information cell head carries with it an item of destination information (VPI/VCI)
- the original destination information (VPI/VCI I) of an information cell which has just been received is fed to a content-addressed memory (CAM)
- the content-addressed memory brings about, in accordance with this destination information, the provision of a plurality of new items of destination information (VPI/VCI II)
- the new items of destination information are each combined with the useful data component of the information cell just received to form new information cells
- the new information cells are passed on to the respective output line, in each case in accordance with the new destination information of the said information cells.

2. Method according to Claim 1, in which the content-addressed memory outputs, in accordance with the respective destination information, a plurality of addresses (ADR1...ADRn) which are fed to a re-evaluation memory (TM), the re-evaluation memory providing a new item of destination information (VPI/VCI II) for each address supplied.

3. Method according to Claim 2, in which the addresses are successively output from the content-addressed memory to the re-evaluation memory.

4. Method according to Claim 1, 2 or 3, in which the multiplied, new information cells are buffered and one of these information cells is always passed on if precisely no non-multiplied information cell is passed on.

5. Method according to Claim 1, 2 or 3, in which non-multiplied information cells are buffered and are not passed on until multiplied information cells which have mutually identical useful data components have been passed on.

6. Method according to one of the preceding claims in which multiplied, new information cells which have mutually identical useful data components are fed in each case to one input of the switching matrix.

7. Method according to one of Claims 1, 2 or 3, in which information cells which are to be multiplied are fed via the switching matrix to a multicast server MS in which these information cells are multiplied, after which the multiplied information cells are passed on via the switching matrix to the relevant output line.

8. Method according to Claim 7, in which the multiplied information cells are fed to a plurality of inputs of the switching matrix.

## Revendications

1. Procédé pour la diffusion d'une cellule d'information, reçue sur une ligne d'entrée (EL1 ... ELn) d'un dispositif de commutation comportant un réseau de couplage (ASN) avec une pluralité d'entrées (E1 ... En) et de sorties (A1 ... An), vers plusieurs lignes de sortie (AL1 ... ALn), procédé dans lequel
- des cellules d'information sont transmises selon un mode de transfert asynchrone,
- chaque cellule d'information comporte un bloc de données utiles (DATA) précédé d'une en-tête de cellule d'information,
- chaque en-tête de cellule d'information (VPI/VCl I) transporte ou véhicule une adresse de destination,
- l'adresse initiale de destination (VPI/VCl I) d'une cellule d'information, qui vient d'être reçue, est appliquée à une mémoire adressable par le contenu (CAM),
- la mémoire adressable par le contenu délivre en fonction de cette adresse de destination plusieurs nouvelles adresses de destination (VPI/VCl II),
- les nouvelles adresses de destination sont assemblées respectivement avec le bloc de données utiles de la cellule d'information qui vient d'être reçue pour former de nouvelles cellules d'information,
- les nouvelles cellules d'information sont, respectivement en fonction de leur nouvelle adresse de destination, acheminées vers la ligne de sortie correspondante.

2. Procédé conforme à la revendication 1, dans lequel
la mémoire adressable par le contenu fournissant, en fonction de l'adresse respective de destination, une pluralité d'adresses (ADR1 ... ADRn) qui sont appliquées à une mémoire de traduction ou de conversion (TM), celle-ci délivrant, pour chaque adresse qui lui est appliquée, une nouvelle adresse de destination (VPI/VCl II).

3. Procédé conforme à la revendication 2, dans lequel
les adresses de la mémoire adressable par le contenu sont transmises l'une après l'autre à la mémoire de traduction ou de conversion.

4. Procédé conforme à la revendication 1, 2 ou 3, dans lequel
les nouvelles cellules d'information multipliées sont stockées temporairement et une de ces cellules d'information étant acheminée précisément à chaque fois qu'aucune cellule d'information non multipliée n'est acheminée.

5. Procédé conforme à la revendication 1, 2 ou 3, dans lequel
les nouvelles cellules d'information non multipliées sont stockées temporairement et acheminées seulement quand des cellules d'information multipliées ayant le même bloc de données utiles ont été acheminées.

6. Procédé conforme à une des revendications précédentes, dans lequel
les nouvelles cellules d'information multipliées ayant le même bloc de données utiles sont appliquées chacune à une entrée du réseau de couplage.

7. Procédé conforme à la revendication 1, 2 ou 3, dans lequel
des cellules d'information à multiplier sont appliquées, à travers le réseau de couplage, à un serveur multidirectionnel MS dans lequel ces cellules d'information sont multipliées, à la suite de quoi les cellules d'information multipliées sont acheminées, à travers le réseau de couplage, vers la ligne de sortie correspondante.

8. Procédé conforme à la revendication 7, dans lequel
les cellules d'information multipliées sont appliquées sur une pluralité d'entrées du réseau de couplage.
